# EUROPÄISCHE PATENTSCHRIFT

(11) **EP 1 243 835 B1**
(45) Veröffentlichungstag und Bekanntmachung des Hinweises auf die Patenterteilung: **13.04.2005**
(21) Anmeldenummer: 01107320.2
(22) Anmeldetag: 23.03.2001
(51) Int. Cl.: F16L 31/02, A61H 33/02

(54) **Verbinder zum Anschluss von Abzweigungen an Schläuchen**
Connector for joining branches to hoses
Raccord pour connecter des branchements de dérivation à des tuyaux flexibles

(43) Veröffentlichungstag der Anmeldung: 25.09.2002
(73) Patentinhaber: Franz Kaldewei GmbH & Co.KG, 59229 Ahlen (DE)
(72) Erfinder: Pichler, Reimund, 59302 Oelde (DE)
(74) Vertreter: Albrecht, Rainer Harald, Dr.-Ing.

(56) Entgegenhaltungen:
- DE-A- 2 147 675
- DE-A- 2 613 529
- DE-A- 3 731 633
- GB-A- 2 147 523
- US-A- 4 358 862

## Beschreibung

Die Erfindung betrifft die Verwendung eines Verbinders zum Anschluss einer Abzweigung an einem Schlauch, insbesondere zum Anschluss einer Düse zur Erzeugung eines Sprudelbades in einer Sanitärwanne.

Eine Sanitärwanne mit Einrichtungen zur Erzeugung eines Sprudelbades wird in der Praxis als Whirlpool bezeichnet. Eine solche Wanne weist eine Mehrzahl von Düsen auf, durch die ein Wasserstrom mit hohem Impuls in den Wannenraum eingegeben wird und/oder der Wannenraum mit Luft begast wird. Die Düsen sind an eine gemeinsame Versorgungsleitung für Luft angeschlossen. Ferner sind sie im Regelfall an eine gemeinsame, wasserführende Leitung angeschlossen, die nach einem Wannenbad aus hygienischen Gründen vollständig und möglichst rückstandsfrei entleert werden muss. An die luft- und wasserführenden Versorgungsleitungen müssen eine Vielzahl von Abzweigungen angeschlossen werden, die mit den Düsen verbunden sind. Im Rahmen der bekannten Maßnahmen wird die Leitungsanordnung aus kurzen Leitungsstücken und T-förmigen Zwischenstücken aufgebaut. Die Montage ist aufwendig, zumal sie durch beengte Platzverhältnisse an der Außenseite einer Sanitärwanne noch erschwert wird. Die zwischen kurze Leitungsabschnitte eingesetzten Verbindungsstücke drosseln vielfach den Strömungsquerschnitt und beeinträchtigen häufig eine vollständige Restwasserentleerung.

Aus DE-A 21 47 675 ist ein Verbinder bekannt, der zum Anschluss einer Abzweigung an einem Schlauch geeignet ist. Der Verbinder besteht aus einem Rohstück und einem auf dem Rohrstück verstellbar angeordneten Spannring. Das Rohrstück weist ein mit einem Kragen versehenes Anschlussende auf, welches in eine mantelseitige Öffnung des Schlauches eingesetzt wird. Dabei wird die Schlauchwandung zwischen dem Kragen und einer Kontaktfläche des Spannringes eingespannt und bildet eine elastisch deformierbare Dichtung zwischen der Kontaktfläche und dem Kragen. Bei der bekannten Ausführung steht der Kragen allerdings im Strömungsquerschnitt vor, so dass eine vollständige Restwasserentleerung nicht möglich ist. Einen ähnlichen Stand der Technik zeigt die Druckschrift DE-A 37 31 633.

Der Erfindung liegt die Aufgabe zugrunde, Maßnahmen anzugeben, damit beim Anschluss eines Verbinders an einer mantelseitigen Öffnung eines Schlauches der Strömungsquerschnitt des Schlauches nicht beeinträchtigt wird und eine vollständige Restwasserentleerung möglich ist.

Gegenstand dieser Erfindung und Lösung dieser Aufgabe ist die Verwendung eines aus einem Rohrstück und einem auf dem Rohrstück verstellbar angeordneten Spannring bestehenden Verbinders zum Anschluss einer Abzweigung an einem Schlauch,
wobei das Rohrstück ein mit einem Kragen ausgebildetes Anschlussende aufweist, welches in eine mantelseitige Öffnung des Schlauches eingesetzt wird,
wobei die Schlauchwandung zwischen dem Kragen und einer Kontaktfläche des Spannringes eingespannt wird und eine elastisch deformierbare Dichtung zwischen der Kontaktfläche und dem Kragen bildet,
wobei der Spannring als topfförmiges Formklemmstück ausgebildet ist, dessen Aufnahmeraum eine den Kragen aufnehmende Tasche bildet, und
wobei der Schlauch durch die Klemmung so in Form gezogen wird, dass der Kragen nicht in den Strömungsquerschnitt des Schlauches hinein vorsteht.

Der Anschluss der Abzweigleitung wirkt sich durch die erfindungsgemäße Ausbildung und Verwendung des Verbinders nicht nachteilig auf den Strömungsquerschnitt der Schlauchleitung und den Strömungsdruckverlust aus. Da in den Strömungsraum der Schlauchleitung keine Anschlusselemente vorstehen, ist eine vollständige Restwasserentleerung möglich. Der Kragen weist eine an die Kontaktfläche des Spannringes angepasste Gegenfläche auf. Zweckmäßig ist er als Ringflansch, beispielsweise mit einer im Wesentlichen ebenen oder kegelförmigen Flanschfläche ausgebildet.

Der Anschluss des Verbinders kann an beliebiger Stelle in Schlauchlängsrichtung erfolgen. An der gewünschten Stelle wird ein Loch in den anzuzapfenden Schlauch eingebracht, dessen Durchmesser dem Außendurchmesser des Rohrstückes entspricht oder auch etwas kleiner sein kann. Das Anschlussende des Rohrstückes wird durch die Öffnung in den Schlauch gedrückt. Anschließend werden das Rohrstück und der Spannring gegeneinander verspannt, wobei die Schlauchwandung zwischen der Kontaktfläche des Spannringes und dem Kragen verpresst wird. Dabei dient das Material des Schlauches als Dichtung.

Es bieten sich verschiedene konstruktive Möglichkeiten an, um den Spannring gegen die Schlauchwandung unter Verformung der Schlauchwandung zu spannen. Gemäß einer bevorzugten Ausführung weist das Rohrstück ein Außengewinde auf und wird der Spannring durch eine mit dem Außengewinde im Eingriff stehende Spannmutter gegen die Schlauchwandung gespannt.

Vorzugsweise wird der Verbinder zum Anschluss von Düsen eines Whirlpools an Versorgungsschläuche für die Zuführung von Luft und/oder Wasser eingesetzt. Bei dieser Anwendung wird das Rohrstück mit dem Düsengehäuse eine an einer Sanitärwanne angeschlossenen Düse verbunden. Die Verbindung kann als lösbar oder feste Verbindung, ggf. auch mit einer Dichtung, ausgeführt sein. Im Rahmen der Erfindung liegt es auch, dass das Rohrstück mit dem endseitigen Kragen einstückig an ein Düsengehäuse angeformt ist. Das Rohrstück kann - ebenso wie das Düsengehäuse - aus Metall oder einem Kunststoff bestehen. Das Anschlussende wird in eine mantelseitige Öffnung eines an der Außenseite der Sanitärwanne verlegten Schlauches eingesetzt.

Im Folgenden wird die Erfindung anhand einer lediglich ein Ausführungsbeispiel darstellenden Zeichnung erläutert. Es zeigen schematisch
- **Fig. 1**: in einer perspektivischen Darstellung ein an Versorgungsschläuche angeschlossenes Düsengehäuse für die Düse eines Whirlpools,
- **Fig. 2**: einen Schnitt durch den Gegenstand der Fig. 1,
- **Fig. 3**: in einer gegenüber Fig. 1 vergrößerten, perspektivischen Darstellung einen Verbinder, der beim Anschluss des Düsengehäuses an die Versorgungsschläuche verwendet wird.

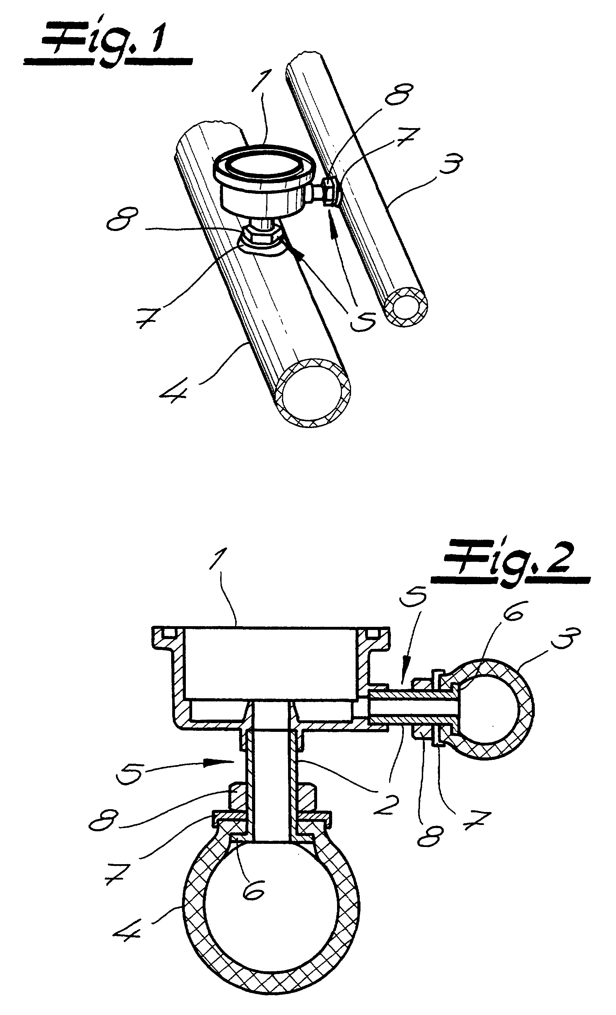

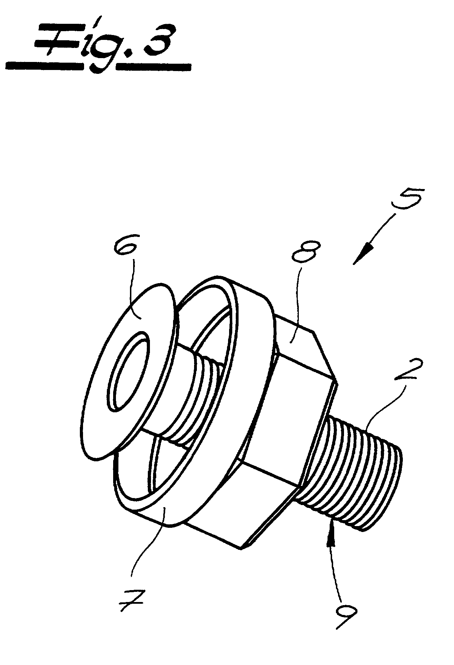

Whirlpool bezeichnet eine Sanitärwanne mit einer Einrichtung zur Erzeugung eines Sprudelbades. Eine solche Wanne weist eine Mehrzahl von Düsen auf, durch die der Wannenraum mit Luft begast und/oder ein Wasserstrahl in den Wannenraum eingeleitet wird. Die Düsen sind untereinander durch Versorgungsleitungen für die Zuführung von Luft bzw. Wasser verbunden. In der Fig. 1 ist das an einer Sanitärwanne montierbare Düsengehäuse 1 einer solchen Düse dargestellt. Das Düsengehäuse 1 weist Einlässe für Wasser und Luft auf, die mit kurzen Rohrstücken 2 an einen Versorgungsschlauch 3 für Luft und einen wasserführenden Schlauch 4 angeschlossen sind. Der Anschluss erfolgt unmittelbar an der Schlauchwand, und zwar unter Verwendung eines im Folgenden beschriebenen und in Fig. 2 und 3 dargestellten Verbinders 5.

Der Verbinder 5 besteht aus einem Rohrstück 2, das an einem schlauchseitigen Anschlussende einen Kragen 6 aufweist, und einem auf dem Rohrstück 2 verstellbar angeordneten Spannring 7. Der Fig. 2 entnimmt man, dass das Anschlussende in eine mantelseitige Öffnung des Schlauches 3, 4 einsetzbar ist. Die Schlauchwandung ist zwischen dem durch die Öffnung seitlich in den Schlauch 3, 4 eingeführten Kragen 6 und einer Kontaktfläche des Spannringes 7 an der Mantelaußenseite des Schlauches 3, 4 eingespannt und bildet eine elastisch deformierbare Dichtung zwischen der Kontaktfläche und dem Kragen 6. Der Spannring 7 ist als topfförmiges Formklemmstück ausgebildet, in dessen Aufnahmeraum die Schlauchwandung unter lokaler Deformation einziehbar ist. Der Fig. 2 entnimmt man, dass der Aufnahmeraum des Formklemmstückes 7 so bemessen ist, dass sich durch lokale Deformation des Schlauches 3, 4 eine den Kragen 6 des Rohrstückes 2 aufnehmende Tasche bildet. Es stehen bei dieser Anordnung keine Teile in den Strömungsquerschnitt des Schlauches 3, 4 vor, so dass der Strömungsdruckverlust im Schlauch 3, 4 nicht verändert wird. Auch ist eine vollständige Restwasserentleerung gewährleistet.

Der Kragen 6 ist als Ringflansch mit einer im Wesentlichen ebenen Flanschfläche ausgebildet. Der Spannring 7 ist durch eine Spannmutter 8, die mit einem Außengewinde 9 des Rohrstücks 2 im Eingriff steht, gegen die Schlauchwand spannbar. Durch die kraftschlüssige Verschraubung lassen sich hohe Klemmkräfte zwischen dem Spannring 7 und dem Kragen 6 erreichen.

## Patentansprüche

1. Verwendung eines aus einem Rohrstück (2) und einem auf dem Rohrstück (2) verstellbar angeordneten Spannring (7) bestehenden Verbinders (5) zum Anschluss einer Abzweigung an einem Schlauch (3, 4),
wobei das Rohrstück ein mit einem Kragen (6) ausgebildetes Anschlussende aufweist, welches in eine mantelseitige Öffnung des Schlauches (3, 4) eingesetzt wird,
wobei die Schlauchwandung zwischen dem Kragen (6) und einer Kontaktfläche des Spannringes (7) eingespannt wird und eine elastisch deformierbare Dichtung zwischen der Kontaktfläche und dem Kragen bildet,
wobei der Spannring (7) als topfförmiges Formklemmstück ausgebildet ist, dessen Aufnahmeraum eine den Kragen (6) aufnehmende Tasche bildet, und
wobei der Schlauch (3, 4) durch Klemmung so in Form gezogen wird, dass der Kragen (6) nicht in den Strömungsquerschnitt des Schlauches (3, 4) hinein vorsteht.

2. Verwendung des Verbinders nach Anspruch 1, wobei der Kragen (6) als Ringflansch ausgebildet ist.

3. Verwendung des Verbinders nach Anspruch 1 oder 2, wobei das Rohrstück (2) ein Außengewinde (9) aufweist und der Spannring (7) durch eine mit dem Außengewinde (9) im Eingriff stehende Spannmutter (8) gegen die Schlauchwandung gespannt wird.

4. Verwendung des Verbinders nach einem der Ansprüche 1 bis 3, wobei das Rohrstück (2) mit dem Düsengehäuse (1) eine an eine Sanitärwanne angeschlossenen Düse verbunden wird und wobei das Anschlussende in eine mantelseitige Öffnung eines an der Außenseite der Sanitärwanne verlegten Schlauches (3, 4) eingesetzt wird.

## Claims

1. A use of a connector (5) including a tubular member (2) and a clamping ring (7) arranged movably on the tubular member (2) for connecting a branch to a flexible tube (3, 4)
wherein the tubular member has a connection end formed with a collar (6) that is inserted in an opening in the outer surface side of the flexible tube (3,4),
wherein the tube wall is tightened between the collar (6) and a contact surface of the clamping ring (7) and forms an elastically deformable seal between the contact surface and the collar
wherein the clamping ring (7) is configured as a cup-shaped form clamping member whose receiving space forms a pocket that accommodates the collar (6), and
wherein the flexible tube (3,4) is pulled into shape by tightening in such manner that the collar (6) does not protrude into the flow profile of the flexible tube (3,4).

2. The use of the connector as cited in Claim 1 wherein the collar (6) has the form of a ring flange.

3. The use of the connector as cited in either Claim 1 or 2, wherein the tubular member (2) has an outer thread (9) and the clamping ring (7) is tightened against the tube wall by a clamping nut (8) that engages with the outer thread (9).

4. The use of the connector as cited in any of Claims 1 to 3, wherein the tubular member (2) is connected to the nozzle housing (1) of a nozzle attached to a bath tub and wherein the connection end is inserted in an opening in the outer surface side of a flexible tube (3,4) running along the outside of the bath tub.

## Revendications

1. Utilisation d'un connecteur (5) constitué d'un tronçon de tube (2) et d'un anneau de serrage (7) disposé de manière réglable sur le tronçon de tube (2) pour raccorder un embranchement à un tuyau flexible (3,4),
dans lequel le tronçon de tube présente une extrémité de raccordement réalisée avec une collerette (6), laquelle est insérée dans une ouverture du côté du manteau du tuyau flexible (3,4),
dans lequel la paroi de tuyau flexible est serrée entre la collerette (6) et une surface de contact de l'anneau de serrage (7) et forme un joint d'étanchéité déformable élastiquement entre la surface de contact et la collerette,
dans lequel l'anneau de serrage (7) est configuré comme une pièce de serrage façonnée en forme de godet, dont l'espace de logement forme une poche recevant la collerette (6),
dans lequel le tuyau flexible (3,4) est mis en place par blocage, de telle sorte que la collerette (6) ne saille pas à l'intérieur de la section transversale d'écoulement du tuyau flexible (3,4).

2. Utilisation du connecteur selon la revendication 1, dans lequel la collerette (6) est configurée comme une bride d'anneau.

3. Utilisation du connecteur selon la revendication 1 ou 2, dans lequel le tronçon de tube (2) présente un pas de vis externe (9) et l'anneau de serrage (7) est serré contre la paroi de tuyau flexible par un écrou de serrage (8) amené en contact avec le pas de vis externe (9).

4. Utilisation du connecteur selon une des revendications 1 à 3, dans lequel le tronçon de tube (2) est relié au logement de gicleur (1) d'un gicleur raccordé à une soupape sanitaire et dans lequel l'extrémité de raccordement est insérée dans une ouverture du côté du manteau d'un tuyau flexible (3,4) disposé sur le côté externe de la soupape sanitaire.
